# EUROPÄISCHE PATENTSCHRIFT

(11) **EP 0 278 279 B1**
(45) Veröffentlichungstag und Bekanntmachung des Hinweises auf die Patenterteilung: **10.05.1995**
(21) Anmeldenummer: 88100835.3
(22) Anmeldetag: 21.01.1988
(51) Int. Cl.: A47J 37/06, A47J 37/00, A47J 37/04

(54) **Stützelement, Klammerelement sowie Anschlagelement zur Vorbereitung bzw. Durchführung eines Garprozesses bei Fleischstücken, insbesondere Geflügel**
Device for holding and gripping meat, especially fowl, before and during the cooking process
Elément de support et de fixation de morceaux de viande, en particulier de volailles, avant et pendant la cuisson

(30) Priorität: 24.01.1987 DE 3702090; 24.01.1987 DE 3702091; 26.05.1987 DE 3717671; 23.12.1987 DE 3743787
(43) Veröffentlichungstag der Anmeldung: 17.08.1988
(73) Patentinhaber: Riesselmann, Gottfried, D-49377 Vechta (DE)
(72) Erfinder: Riesselmann, Gottfried, D-2848 Vechta (DE); Kühling, Franz, D-2842 Lohne (DE); Grimm, Rolf, D-2903 Bad Zwischenahn (DE)
(74) Vertreter: Rieder, Hans-Joachim, Dr.

(56) Entgegenhaltungen:
- DE-A- 1 679 266
- DE-A- 2 105 684
- GB-A- 1 140 386
- US-A- 1 485 253
- US-A- 2 888 872
- US-A- 4 027 583
- US-A- 4 127 060
- US-A- 4 450 759
- US-A- 4 633 773

## Beschreibung

Die Erfindung betrifft zunächst ein Stützelement nach den Merkmalen des Oberbegriffes des Anspruches 1.

Ein derartiges Stützelement ist beispielsweise aus der US-PS 4 027 583 bekannt. Das bekannte Stützelement besteht aus zwei teleskopierbar ineinander schiebbaren Drahtgestell-Teilen, wobei in dem unteren Teil die Drähte in Form eines Abschnittes einer hyperbolischen Kurve verlaufen. Ein Geflügel, beispielsweise ein Hähnchen, wird von oben durch seine untere Öffnung auf das untere Stützelement aufgebracht. Sodann wird von oben, durch den Halsbereich des Hähnchens, das zweite Stützelement eingeschoben. Durch das teleskopartige Zusammenpassen der Stützelemente ist das Hähnchen dann gehaltert.

Weiterhin ist ein Stützelement aus der DE-A-21 05 684 bekannt geworden. Dieses Stützelelement besteht aus einem im wesentlichen zylindrischen Körper, welcher in seinem Spitzenbereich eine gewisse Verjüngung aufweist. Er dient nur zum Verbleib in einem Geflügel während der Gefrierlagerung.

Bezüglich des zunächst erwähnten Stützelementes wird als nachteilig die zweiteilige Ausführung angesehen. Zudem muß beim Einstecken des oberen Stützelementes von Hand oder durch ein besonderes Werkzeug zunächst eine geeignete Öffnung in dem Geflügel geschaffen werden. Hiermit ist ein nicht unbeträchtlicher Handhabungsaufwand verbunden. Bezüglich des weiteren aus dem Stand der Technik bekannten Stützelementes werden die Eigenschaften beim Auftauen bzw. die Verwendung bei einem aufgetauten Fleischstück bez. Geflügel als noch unbefriedigend angesehen. Das aufgetaute Geflügel findet keinen besonderen Halt an dem Stützelement.

Ausgehend von dem vorbeschriebenen Stand der Technik stellt sich der Erfindung die Aufgabe, ein Stützelement anzugeben, das bei einfacher Ausgestaltung einen verbesserten Gebrauchswert besitzt.

Diese Aufgabe ist nach der Erfindung durch die Merkmale des Anspruches 1 gelöst.

Dadurch, daß das Stützelement einen Spitzen-Abschnitt verringerten Durchmessers zum Durchstoßen, Ausfüllen und/oder Aufrechterhalten der Durchgangshöhlung im Fleischstück besitzt, kann ein Fleischstück, insbesondere ein Geflügel, einfach von oben auf das Stützelement aufgeschoben werden, so weit, bis die Spitze aus dem Fleischstück bzw. dem Geflügel oben herausschaut. Ein weiteres Teil braucht nicht in das Fleischstück eingebracht zu werden. Darüber hinaus ist der Spitzen-Abschnitt verringerten Durchmessers in vorteilhafter Weise an den Knochenaufbau eines Geflügels, insbesondere eines Hähnchens angepaßt. Es ergibt sich eine Schulter, auf welcher das Geflügel auf Grund seiner Knochenausbildung aufsitzen kann. Ein weiterer besonderer Vorteil des erfindungsgemäßen Stützelementes wird darin gesehen, daß ein Fleischstück, insbesondere ein Geflügel zusammen mit einem derartigen Stützelement eingefroren werden kann.

Bevorzugt sind zum Verbleib in dem Fleischstück während des Gefrierlagerns und zur Verwendung während eines Garvorganges Stützelemente unterschiedlicher Ausbildung vorgesehen. Das Stützelement, welches zum Verbleib während des Gefriervorganges gedacht ist, ist bevorzugt als geschlossenwandiger Hohlkörper ausgebildet. Da ein derartig gestaltetes Stützelement zum Durchführen des Garvorganges nicht geeignet ist, ist es vor Einleiten des Garvorganges herauszunehmen und durch ein anderes Stützelement, in einer Ausgestaltung wie sie weiter unten noch beschrieben ist, zu ersetzen. Die Ausgestaltung als geschlossenwandiger Hohlkörper hat den Vorteil, daß auch bei einem gefrorenen Fleischstück ein relativ einfaches Herausziehen möglich ist.

Ein Stützelement, wie es bevorzugt zur Durchführung des Garvorganges Verwendung findet, ist gekennzeichnet durch eine Öffnung am unteren Ende und in Abständen zueinander angeordneten Stützen, welche in den Spitzen-Abschnitt eine Luftdurchtrittsöffnung ausbilden. Hierdurch ist, wie bei dem bekannten Stützelement wie es weiter oben erwähnt worden ist an sich auch gegeben, eine Durchtrittsmöglichkeit für die Heißluft durch das Innere des Grillgutes geschaffen.

Von weiterer besonderer Bedeutung ist eine weitgehendst konische Ausbildung des Stützelementes. Dies ist zunächst von Bedeutung für das während einer Gefrierlagerung in dem Fleischstück befindliche Stützelement, da dies die Entformbarkeit des Stützelementes aus dem gefrorenen Fleischstück nochmals entscheidend verbessert. Die konische Ausbildung ist aber auch von Bedeutung für das während des Garvorganges zu verwendende Stützelement. Konische Ausbildung bedeutet hierbei, daß das Stützelement mit einem sich von unten nach oben stetig verringernden Durchmesser ausgebildet ist, abgesehen von dem Übergang zu dem Spitzen-Abschnitt verringerten Durchmessers, bezüglich dessen eine zur Ausbildung einer Stufe notwendige große Durchmesserverringerung gegeben ist.

Eine weitere wesentliche Fortbildung des Stützelementes wird darin gesehen, daß die Stützen aufspreizbar sind. Dies kann sich insbesondere auch alternativ zu der Stufenausbildung empfehlen. Beim Aufbringen und nachfolgenden Durchführen des Garvorganges bei einem gefrorenem Fleischstück, etwa einem gefrorenen Geflügel, erweicht sich das Fleischstück zunächst. Um hierdurch etwa auftretenden Halterungsnachteilen vorzubeugen, kann sich die spreizbare Ausführung der Stützelemente empfehlen. Bevorzugt etwa in federartiger Form, wie weiter unten noch im Einzelnen in bezug auf ein Klammerelement beschrieben ist.

Die erwähnten Stützelemente einerseits zum Verbleib in dem Fleischstück während des Gefrierlagerns und andererseits zur Verwendung während eines Garvorganges sind bevorzugt derart einander angepaßt, daß ein zum Verbleib in dem Fleischstück während einer Gefrierlagerung bestimmtes Element zumindest in seinem unteren Bereich äußere Abmessungen besitzt, welche den zugeordneten Abmessungen eines zur Verwendung während eines Garvorganges bestimmten Elementes entsprechen. Weiter bevorzugt sind die Elemente in ihrer äußeren Form praktisch identisch ausgebildet, wobei ein besonderer Vorteil noch dann gegeben ist, wenn das zum Verbleib in dem Fleischstück während einer Gefrierlagerung bestimmte Element geringfügig größere Abmessungen aufweist.

Nachstehend ist das Stützelement noch in weiterer Einzelheit beschrieben. Vorzugsweise ist, wie bereits auch erwähnt, das Stützelement als konischer Spreizkörper ausgebildet, so daß es mit Vorteil keilartig in das Fleisch eintreibbar ist, wobei sich das Stützelement vorzugsweise stufig in mehreren Abschnitten konisch verjüngt und die Durchmesser der einzelnen Abschnitte an die natürliche Ausdehnung des Innenhohlraumes des Fleisches angepaßt sind. Bei einer anderen Weiterbildung der Erfindung ist das als Spreizorgan verwendete Stützelement als weitgehend stabförmiger Körper ausgebildet, von welchem Spreizelemente radial vorstehen. Die Spreizelemente halten die Wandung einer Schlachtöffnung etwa eines Geflügels von dem stabförmigen Körper fern und ermöglichen einen Luftzutritt und Luftdurchzug. Vorzugsweise sind die Spreizelemente in radialer Richtung bewegbar, um ein Einführen des Spreizkörpers in das Fleisch zu erleichtern. Der stabförmige Körper kann beispielsweise hohl ausgebildet sein, so daß ein teilweises Versenken der Spreizelemente in den stabförmigen Körper möglich ist.

Eine andere Weiterbildung der Erfindung sieht vor, daß das Stützelement an einem Ende ein Anschlußelement aufweist, mittels dessen es nach Art eines Grillspießes etwa waagerecht in einer Grillvorrichtung anordbar ist. Ein Herunterrutschen des Fleischstückes von dem waagerecht angeordneten Stützelement wird bei einer bevorzugten Ausbildung dadurch verhindert, daß das freie, dem Anschlußelement abgewandte Ende ein sich quer zum Stützelement erstreckendes, lösbares Anschlagelement aufweist. Das Stützelement kann auch als Ummantelung einer Heizquelle ausgebildet sein, so daß mittels der Heizquelle das Fleisch durch das Stützelement hindurch von Innen aktiv erhitzt werden kann.

Ein ganz wesentlicher Vorteil der beschriebenen Stützelemente, insbesondere der unterschiedlichen Stützelemente für den Verbleib in einem Fleischstück während eines Gefriervorganges einerseits und eine Verwendung während eines Garvorganges andererseits wird auch darin gesehen, daß vor Durchführung eines Garvorganges ein Auftauen bzw. Antauen von Fleischstücken, insbesondere Geflügel, nicht mehr erforderlich ist. Dieses Auftauen bzw. Antauen ist für einen Küchenbetrieb hygienisch bedenklich, weil die aufgetauten Tierkörper Bakterien, Keime und dergleichen freisetzen können, die über mit den Tierkörpern in Berührung kommende Gerätschaften und Personen in einem Küchenbetrieb übertragen werden können. Die Erfindung stellt Geflügelkörper zur Verfügung, die auch im gefrorenen Zustand auf einen Grillspieß oder auf ein Stützelement gemäß der Erfindung aufgebracht werden können.

Das weiter oben bereits beschriebene Stützelement, welches bevorzugt zum Verbleib in dem Fleischstück während eines Gefriervorganges ausgebildet ist, ist als Rundprofil ausgebildet, das sich nach dem Einstecken in den Tierkörper ähnlich einer Stange durch den Tierkörper erstreckt und aus den durch das Schlachten entstandenen Öffnungen im Tierkörper an der Bauchseite und an der Halsseite vorsteht. Nach dem Einfrieren verbleibt das Rundprofil im Tierkörper und kann unmittelbar vor der Zubereitung wieder herausgezogen werden. Die Ausbildung als Hohlkörper, beispielsweise in Form einer Hülse, hat den Vorteil, daß diese beispielsweise von Innen mit Wasser, insbesondere warmem Wasser, benetzt werden kann, um das Herausziehen aus dem tiefgefrorenem Geflügel-Körper unmittelbar vor dessen Einsetzen in eine Garvorrichtung zu erleichtern. Das Stützelement kann dabei als einseitig offenes Hohlteil ausgebildet sein, in das entsprechend warmes Wasser eingeführt werden kann, um das Herauslösen aus dem gefrorenen Geflügel-Körper zu erleichtern. Dabei kann das Stützelement z. B. als Zapfen ausgebildet sein. Das Stützelement ist stets wenigstens so lang wie der Geflügel-Körper, damit die Enden aus dem gefrorenen Geflügel-Körper vorstehen und ein durchlaufender Durchbruch, eine Durchgangshöhlung, nach Herausziehen des Stützelementes ausgebildet ist. Das Stützelement kann auch, wie bereits teilweise beschrieben, Abschnitte unterschiedlichen Durchmessers aufweisen. So kann das Stützelement z. B. relativ große Durchmesser aufweisen, um Bauchhöhle und Brusthöhle des Geflügel-Körpers relativ weit offenzuhalten. Dies ermögliche eine Zubereitungsart, bei welcher z. B. Füllungen eingegeben werden oder auch von Innen mit Gewürzen beschichtet werden kann. Eine bevorzugte Ausführungsform sieht vor, daß das Stützelement eine die Bauchhöhle ausfüllenden ersten zylinderförmigen, konischen Abschnitt aufweist, der in einen die Brusthöhle ausfüllenden, sich kegelförmig verjüngenden zweiten Spitzen-Abschnitt übergeht, welcher selbst den Tierkörperhals durchdringen kann oder aber in einen dritten, stiftförmigen Abschnitt hierzu auslaufen kann. Das Stützelement kann, soweit es zum Verbleib in dem Fleischstück während eines Gefriervorganges bestimmt ist, aus Kunststoff hergestellt sein, wobei aus lebensmitteltechnischer Sicht unbedenkliche Kunststoffe verwendet wurden. Es sind jedoch auch andere geeignete Werkstoffe verwendbar. Soweit das Stützelement zur Durchführung des Garvorganges bestimmt ist, besteht es vorzugsweise aus rostfreiem Edelstahl.

Eine weitere bevorzugte Ausgestaltung des Stützelementes, welches zum Verbleib in dem Fleischstück während eines Gefriervorganges bestimmt ist, wird darin gesehen, daß in vorbestimmten Bereichen etwa radial abstehende Vorsprünge ausgebildet sind. Die radial abstehenden Vorsprünge wirken wie Widerhakenelemente, die das in den Geflügelkörper eingesteckte Aufweitelement verankern. Unbeabsichtigtes Herausrutschen wird dadurch unterbunden. Die Vorsprünge sind vorzugsweise als angeformte Laschen ausgebildet. Die Laschen können am Umfang des Aufweitelementes gleichmäßig verteilt angeordnet werden. Beispielsweise können vier Laschen in einer Ebene radial abstehend vorgesehen werden. Bei einem Stützelement, wie es weiter oben beschrieben worden ist, sind erste Vorsprünge im Bereich des freien Endes des Spitzen-Abschnittes, auch etwa des dritten stiftförmigen Abschnittes, angeordnet. Vorzugsweise sind die ersten Vorsprünge an der Spitze befindliche Laschen, die über ein Gelenkelement mit dem Spitzen-Abschnitt verbunden sind. Das Gelenkelement erleichtert ein Abbiegen der Laschen während des Einschiebens des stöpselartigen Stützelementes in den Tierkörper, so daß das Einschieben mit wenig Kraftaufwand möglich ist, weil sich die Laschen während des Einschiebens an die äußere Umfangsfläche des Sützelementes nahezu anlegen können. Führt das Stützelement jedoch eine der Einsteckbewegung entgegengesetzte Herausrutschbewegung durch, können sich die Laschen auf Grund der Gelenkelemente aufrichten und wie Widerhaken im Fleisch des Tierkörpers verankern. Vorzugsweise ist jedes Gelenkelement als Filmscharnier ausgebildet. Da das Stützelement ein Kunststoffteil ist, bieten sich Filmscharniere als Gelenkscharniere für angeformte Laschen an. Es ist jedoch auch möglich, als Vorsprünge wenigstens eine am dritten Abschnitt bzw. Spitzen-Abschnitt flanschartig angeordnete Ringscheibe vorzusehen. Die Ringscheiben können z. B. aus flexiblem Werkstoff bestehen, so daß sie sich beim Einschieben des Stützelementes in einen Tierkörper umlegen und nach Art von Widerhaken wieder aufrichten können. Zur Befestigung der Ringscheiben an dem Stützelement ist vorgesehen, daß in den dritten Abschnitt wenigstens eine umlaufende Nut zur Aufnahme je einer Ringscheibe eingeformt ist. Ebenso wie sternförmig angeordnete Laschen in mehreren Ebenen verteilt angeordnet sein können, können auch mehrere Ringscheiben übereinander vorgesehen werden. Die Ringscheiben können auch unterschiedliche Durchmesser aufweisen. Weiterhin zeichnet sich das Stützelement dadurch aus, daß zweite Vorsprünge am unteren freien Ende des zylinderförmigen Abschnittes angeordnet sind. Die zweiten Vorsprünge haben den Vorteil, daß sie als Handhabe benutzt werden können, um ein Stützelement aus einem gefrorenen Fleischstück leichter herausziehen zu können. Zur Erleichterung des Herausziehens ist weiterhin vorgesehen, daß die zweiten Laschen eine aufrauhende Oberflächenprofilierung aufweisen.

Weiterhin ist im Zusammenhang mit dem Stützelement ein Klammerelement von Vorteil, welches zum Klammern von Grillgut, insbesondere gefrorenem Geflügel, welches eine mit einem Stützelement nach Anspruch 1 geschaffene Höhlung aufweist, auf einen Grillspieß aufschiebbar ist, mit gegen das Grillgut vorragenden, vorzugsweise in das Grillgut eindringfähigen Armen. Bei einem gefrorenen Fleischstück, insbesondere Geflügel, welches unmittelbar einem Garvorgang, insbesondere durch Grillen, unterzogen wird, besteht das Problem, daß während des Auftauens eine zunehmende Erweichung des Fleisches gegeben ist. Zunächst etwa verwendete Befestigungsmittel an einem Grillspieß können dann zunehmend herausrutschen oder dergleichen. Um hier Abhilfe zu schaffen lehrt die Erfindung, daß das Klammerelement wenigstens ein federndes Element aufweist, mittels welchem die Arme in ihrer Einwirkung auf das Grillgut durch Federkraft unterstützt sind. Die Federkraft sorgt mit Vorteil dafür, daß die Arme bei einem Volumenschwund des Grillgutes an dem Grillgut in Anlage bzw. mit dem Grillgut in Eingriff gehalten werden. Es können Arme für das Klammerelement vorgesehen sein, die das Grillgut umfassen und selbst als federnde Elemente ausgebildet sind, beispielsweise können die Arme Metallzungen oder dergleichen sein, so daß die Arme unter Eigenfederspannung an dem Grillgut anliegen und bei Volumenverlust des Grillgutes aufgrund ihrer Federspannung am Grillgut verbleiben. Die Arme können auch als in einem Hohlraum im Grillgut eingreifende Aufspreizer ausgebildet sein, die das Grillgut von innen erfassen. Metallzungen bzw. Federfinger sind als elastisch federnde Elemente geeignet, die das Grillgut von innen halten und gleichzeitig einen Hohlraum im Grillgut aufspreizen. Dadurch kann in den derart aufgespreizten Hohlraum, beispielsweise die Körperhöhlung bei Geflügel, auch die Wärme zum Garen von Innen an das Grillgut gebracht werden, wodurch kürzere Garzeiten erreichbar sind. Bei einer bevorzugten Ausbildung des erfindungsgemäßen Klammerelementes ist vorgesehen, daß das Klammerelement wenigstens ein Arme tragendes Greifelement aufweist, welches in Grillspießlängsrichtung beweglich ist und daß das federnde Element eine in Grillspießlängsrichtung auf das Greifelement wirkende Druckfeder ist. Erleidet das Grillgut beim Grillen einen Volumenschwund, so ändert sich auf Grund der Federkraft der Druckfeder mit Vorteil auch der Abstand zweier Klammerelement zueinander, zwischen denen das schrumpfende Grillgut gehalten wird. Dies hat mit Vorteil zur Folge, daß das Grillgut auch weiterhin mit ausreichender Kraft zwischen dem Klammerelementenpaar geklammert bleibt, wobei die Arme der Klammerelemente an dem Grillgut in Anlage bleiben bzw. in Eingriff gehalten werden. Ist das Grillgut in gefrorenem Zustand auf den Grillspieß gesteckt worden, so war es zu Beginn des Grillvorganges unter Umständen so fest gefroren, daß selbst einbringfähige Arme noch nicht in das Grillgut eindringen konnten. Beim Auftauen des Grillgutes verursacht dann die Federkraft der Druckfeder mit Vorteil ein erstmaliges Eindringen von eindringfähigen Armen in das weicher werdende Grillgut. Selbstverständlich können auch Arme, die selbst als federnde Elemente ausgebildet sind, z. B. von dem Greifelement abstehende abstehende Zinken, Finger und dergleichen aus elastischem Werkstoff bestehende Teile, mit solchen Druckfedern kombiniert werden. Die erfindungsgemäßen Klammerelemente sind dann dabei durch die Federkraft von zwei federnden Elementen in ihrer Einwirkung auf das Grillgut unterstützt, nämlich sowohl durch die eigene Federelastizität, als auch durch die Druckfeder.

Eine Weiterbildung der Erfindung sieht vor, daß das Klammerelement zwei Greifelemente mit Armen aufweist, deren Arme in einander entgegengesetzte Richtungen weisen, wobei zwischen die Greifelemente eine Druckfeder gesetzt ist. Beim Aufspießen von Grillgutstücken auf den Grillspieß wird jeweils zwischen einander benachbarte Grillgutstücke ein erfindungsgemäßes Klammerelment mit beidseitig vorragenden Armen gesetzt, wobei die Greifelemente des Klammerelementes so weit zusammengedrückt werden, wie dies die zwischengesetzte Druckfeder erlaubt, so daß Greifelemente des Klammerelementes mit der Federkraft der Druckfeder beaufschlagt sind und beim Schrumpfen der Grillgutstücke in Richtung der jeweils von ihnen gehaltenen Grillgutstücke auseinandergedrückt werden.

Eine andere Weiterbildung der Erfindung sieht vor, daß das Greifelement über die Druckfeder an einem auf dem Grillspieß, beispielsweise mittels einer Schraube, festsetzbaren Gleitstück abgestützt ist. Mit Vorteil können Klammerelemente mit einzelnen über Druckfedern abgestützten Greifelementen und Klammerelemente mit zwei Greifelementen, die über die Druckfeder gegeneinander abgestützt sind, auf einem Grillspieß miteinander kombiniert werden, wobei die Klammerelemente mit den einzelnen Greifelementen jeweils an den Enden der aufgespießten Grillgutreihe auf dem Grillspieß festgesetzt werden.

Die Druckfeder ist vorzugsweise eine konzentrisch auf den Grillspieß aufschiebbare Schraubenfeder.

Eine nächste Weiterbildung der Erfindung sieht vor, daß die Arme des Klammerelementes etwa parallel zum Grillspieß ausgerichtete Zinken sind. Die Zinken können aus federelastischem Draht entsprechend geformt bzw. gebogen sein. Sie können auch als Metallspitzen, Hakenspitzen oder dergleichen ausgebildet sein, wie es bei herkömmlichen Klammerelementen der Fall ist, jedoch unter der Federkraft des federnden Elementes tief in das Grillgut eindringen können, so daß ein besonders sicherer Halt des Grillgutes auf dem Grillspieß gewährleistet ist. Vorzugsweise weist jede der Zinken wenigstens eine Schneidflanke auf, die sich in das Grillgut, insbesondere noch gefrorenes Grillgut, einschneidet und dadurch das Grillgut besonders drehfest auf dem Grillspieß hält.

Weiterhin ist in diesem Zusammenhang ein Anschlagelement vorteilhaft, zur Verwendung auf einem Grillspieß, gemäß dem Anspruch 11. Vorteilhaft ist hier, daß das Anschlagteil eine Erstreckung aufweist, welche ein Mehrfaches, etwa das Fünf- bis Fünfzehnfache des Durchmessers der Durchgangsbohrung des Festsetzungsteiles, also des Durchmessers des Grillspießes besitzt. Bei dem wie vorerwähnt möglichen Schrumpfen und Aufweichen eines Grillstückes während des Auftauvorganges ist so gleichwohl ein sicherer Halt gegeben.

Nachstehend ist die Erfindung im einzeln anhand der auf der beigefügten Zeichnung dargestellten Ausführungsbeispiele erläutert, wobei im einzelnen zeigt:
- Fig. 1: ein erstes Ausführungsbeispiel eines Stützelementes in der Seitenansicht;
- Fig. 2: ein zweites Ausführungsbeispiel eines Stützelementes in der Seitenansicht;
- Fig. 3: das Stützelement gemäß Fig. 2 in der Draufsicht;
- Fig. 4: ein weiteres Stützelement in der Seitenansicht;
- Fig. 5: ein weiteres Stützelement in der Seitenansicht;
- Fig. 6: eine Schnittdarstellung eines Stützelementes mit radialen Vorsprüngen;
- Fig. 7: eine Schnittdarstellung einer Spitze eines Stützelementes mit einer Ringscheibe;
- Fig. 8: eine Schnittdarstellung gemäß der Linie VIII-VIII in Fig. 7;
- Fig. 9: eine Schnittdarstellung gemäß der Linie IX-IX in Fig. 6;
- Fig. 10: einge Schnittdarstellung gemäß der Linie X-X in Fig. 6;
- Fig. 11: ein Set von Stützelementen, von welchen eines während des Garvorganges und weitere während einer Gefrierlagerung verwendbar sind;
- Fig. 12: eine teilweise Schnittdarstellung des in Fig. 11 dargestellten Stützelementes zur Verwendung während des Garvorganges;
- Fig. 13: eine Schnittdarstellung eines in Fig. 11 dargestellten Stützelementes zur Verwendung während einer Gefrierlagerung;
- Fig. 14: eine Draufsicht auf den Gegenstand gemäß Fig. 11;
- Fig. 15: ein Abschnitt eines Grillspießes mit geschnitten dargestellten Grillgutstücken und Klammerelementen;
- Fig. 16: eine Ansicht eines Klammerelementes gemäß Fig. 1 in Richtung der Arme des Klammerelementes;
- Fig. 17: eine Ansicht wie Fig. 2 eines zweiten Ausführungsbeispieles eines Klammerelementes;
- Fig. 18: ein auf einem Grillspieß angeordnetes drittes Ausführungsbeispiel eines Klammerelementes im Schnitt;
- Fig. 19: eine Seitenansicht eines vierten Ausführungsbeispieles eines Klammerelementes;
- Fig. 20: einen Abschnitt eines Grillspießes mit Grillgut und einem geschnitten dargestellten fünften Ausführungsbeispieles von Klammerelementen;
- Fig. 21: eine Ansicht einer weiteren Ausführungsform des Klammerelementes mit in einen Hohlraum im Grillgut eingreifenden federnden Aufspreizern;
- Fig. 22: eine Vorderansicht eines Anschlagelementes;
- Fig. 23: eine Ansicht von oben des Gegenstandes gemäß Fig. 22;
- Fig. 24: eine Vorderansicht des Gegenstandes gemäß Fig. 23; und
- Fig. 25: eine teilweise geschnittene Darstellung eines Abschnittes eines Grillspießes mit eingeführtem aufspreizbaren Klammerelementes und einem Anschlagelement.

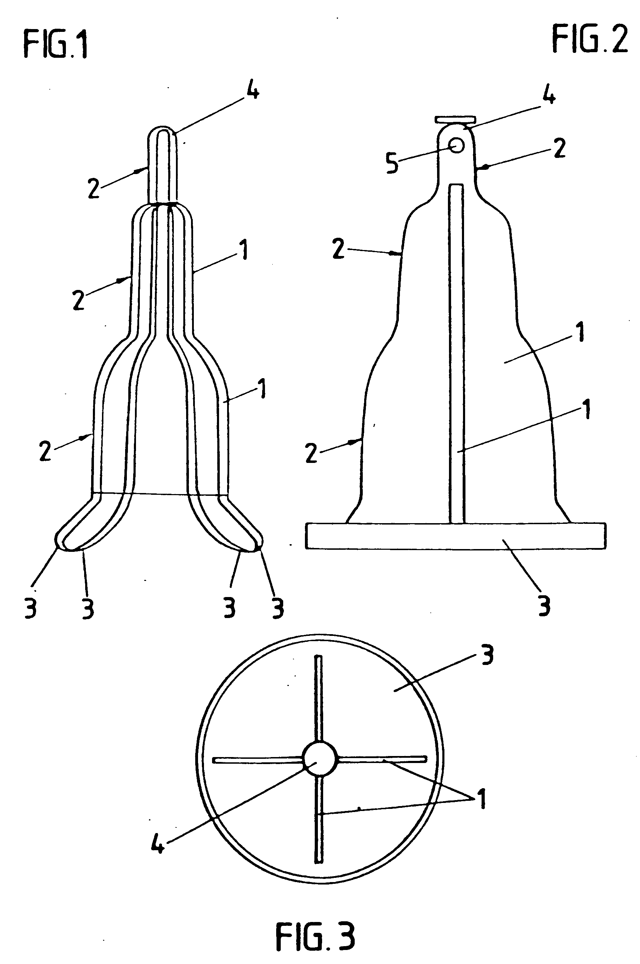

Dargestellt und beschrieben ist zunächst in Fig. 1 ein in der Seitenansicht aus Stützen 1, beispielsweise aus Draht, käfigartig ausgebildetes Stützelement. Das Stützelement verjüngt sich stufig in mehreren Abschnitten 2, die jeweils für sich auch konisch ausgebildet sind. Das Stützelement ist als Gestell mit vier Füßen 3 ausgebildet und kann senkrecht aufgestellt werden. Auf das Stützelement kann ein Stück Fleisch, beispielsweise ein Geflügel, insbesondere ein gefrorenes Geflügel, so aufgesteckt werden, daß das Stützelement in eine Schlachtöffnung des Fleisches eindringt und das aufragende Ende bzw. der Spitzen-Abschnitt 4 des Stützelementes oben aus dem Fleisch herausragt.

Die Stützen 2 sind in Abständen zueinander angeordnet, so daß zwischen ihnen Zwischenräume verbleiben, die einen Heißluftzutritt an das Fleisch zulassen. Außerdem kann, beispielsweise mit einem Haken oder dergleichen, das Stützelement unterhalb des aufragenden Endes 4 in dem Spitzen-Abschnitt durchgriffen und zusammen mit dem aufgesteckten Fleisch angehoben werden.

Fig. 2 zeigt in der Seitenansicht ein zweites Ausführungsbeispiel eines Stützelementes, welches sich wie das Stützelement gemäß Fig. 1 stufig in mehreren Abschnitten 2, jedoch jeweils konisch, verjüngt. Das Stützelement gemäß Fig. 2 ist aus zwei als Leisten ausgebildeten Stützen 1 zusammengesetzt, wobei die Stützen 1 zu einem Kreuzprofil miteinander verbunden sind. Im Bereich des oberen Endes 4 weist das Stützelement eine Durchtrittsöffnung 5 zum Anheben des Stützelementes auf. Das Stützelement gemäß Fig. 2 ist ebenfalls als Gestell ausgebildet, wobei der Fuß 3 des Stützelementes eine Fettpfanne ist.

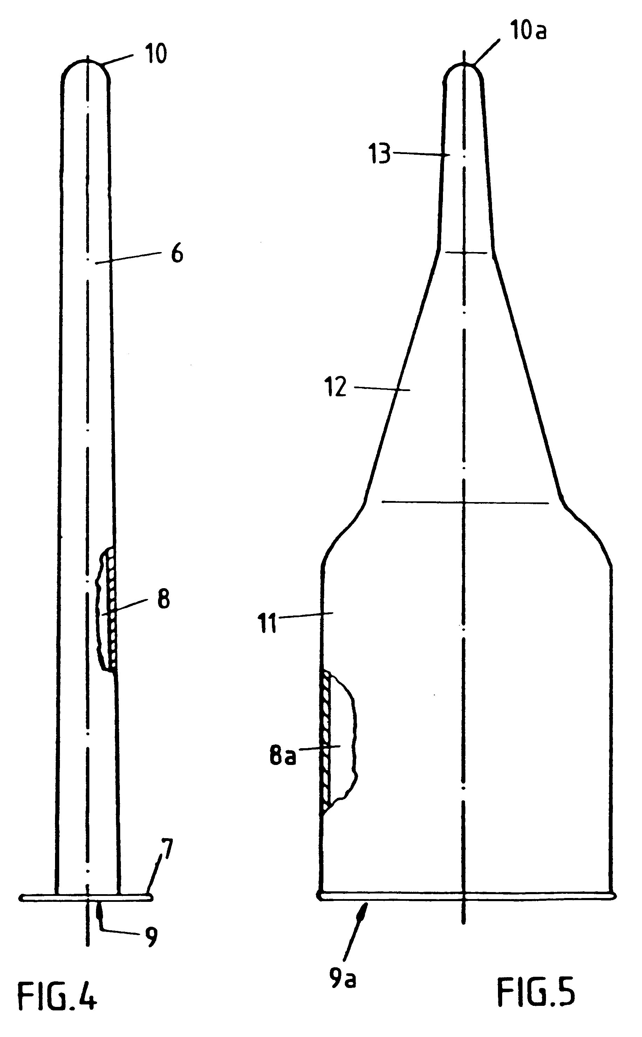

In der in Fig. 3 dargestellten Draufsicht auf das Stützelement gemäß Fig. 2 ist die Kreuzprofilanordnung der Stützen 1 zu erkennen, sowie die Ausbildung des Fußes 3 als Fettpfanne. Das Stützelement gemäß Fig. 4 ist in einer Seitenansicht dargestellt. Das Stützelement ist als länglicher Zapfen 6 ausgebildet, der im Querschnitt rund ist. Am unteren Ende ist ein Kragenflansch 7 angeformt, der die Handhabung während des Einsteckens und Herausziehens in bzw. aus dem hier nicht weiter dargestellten Geflügelkörper erleichtert. Durch einen Ausbruch ist verdeutlicht, daß der Zapfen als einen Hohlraum 8 umschließendes Hohlteil ausgebildet ist, das am unteren Ende bei 9 offen ist und dessen oberes Ende 10 verschlossen ist. Am verschlossenen oberen Ende 10 ist das Stützelement abgerundet. Wie dargestellt ist die Form des Zapfens 6 durchgehend leicht konisch, das heißt, am unteren Ende im Bereich des Kragenflansches ist der runde Durchmesser größer als im Bereich des oberen Endes 10.

In Fig. 5 ist eine andere hülsenförmige Ausbildung eines Stützelementes dargestellt. Durch den eingezeichneten Ausbruch ist wiederum angedeutet, daß das Stützelement hohl ist, wobei seine Wandungen den Hohlraum 8a umschließen. Am unteren Ende ist bei 9a das Stützelement offen. Das obere Ende 10a ist wiederum geschlossen und mit einer Abrundung ausgeformt. Dieses Stützelement hat Abschnitte unterschiedlicher Durchmesser, wobei ein eine Bauchhöhle eines hier nicht dargestellten Geflügelkörpers ausfüllender, erster zylinderförmiger Abschnitt mit 11 bezeichnet ist. Der zylinderförmige Abschnitt 11 geht in einen die Brusthöhle des Geflügelkörpers ausfüllenden, sich kegelförmig verjüngenden zweiten Abschnitt 12 über, welcher in einem die Öffnung im Bereich des Tierkörperhalses durchdringenden dritten stiftförmigen Abschnitt 13 ausläuft, der im oberen Ende 10a des Aufweitelementes endet.

Beide in den Fig. 4 und 5 dargestellten Stützelemente sind als einseitig offene Hohlteile aus Kunststoff geformt.

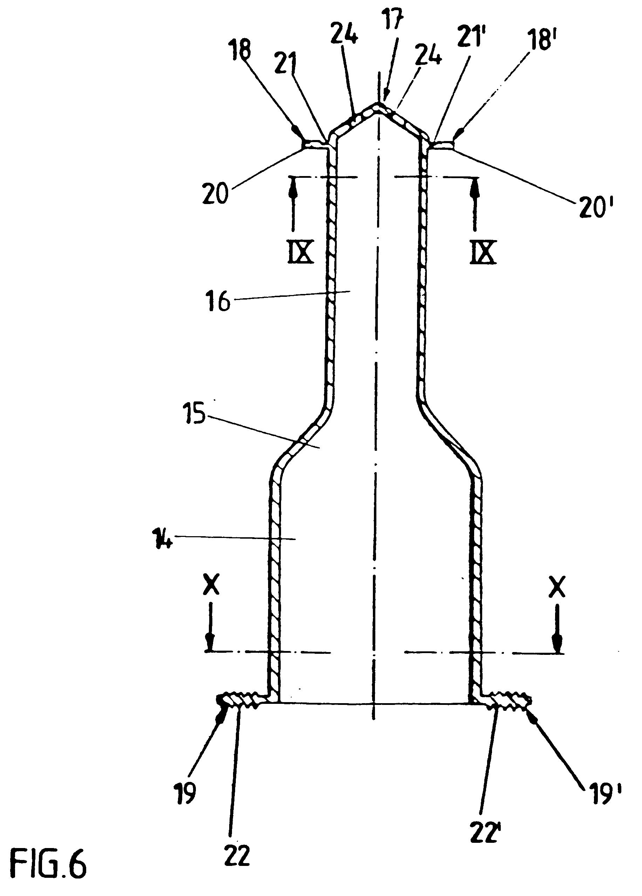

Fig. 6 zeigt eine Seitenansicht eines weiteren Stützelementes im Schnitt. Das Stützelement ist ein hohler Zapfen mit einem unteren ersten zylinderförmigen Abschnitt 14, der in einen sich verjüngenden zweiten Abschnitt 15 übergeht. Der sich verjüngende zweite Abschnitt 15 läuft in einen dritten Abschnitt 16 aus. In vorbestimmten Bereichen weist das Stützelement etwa radial abstehende Vorsprünge auf, von denen hier im Bereich des freien Endes 17 (Spitzen-Abschnitt) des dritten stiftförmigen Abschnittes 16 angeordnete erste Vorsprünge 18,18ʹ, sowie am unteren freien Ende des zylinderförmigen ersten Abschnittes 14 angeordnete zweite Vorsprünge 19,19ʹ sichtbar sind. Jeder ersten Vorsprung 18,18ʹ ist als angeformte Lasche 20,20ʹ ausgebildet, wobei jede Lasche über ein hier schematisch angedeutetes Filmscharnier 21,21ʹ als Gelenkelement mit dem dritten Abschnitt 16 verbunden ist. Auch die zweiten Vorsprünge 19,19ʹ sind als Laschen 22,22ʹ ausgebildet und weisen eine aufrauhende Oberflächenprofilierung auf, die hier schematisch angedeutet ist.

Die Laschen 22,22ʹ dienen als Handhabung, um das Aufweitelement leicht aus einem gefrorenen Tierkörper herausziehen zu können.

Das freie Ende 17 des dritten Abschnittes 16 weist eine verschließende Spitze 23 auf, die mit Durchbrüchen 24 versehen ist. In das als Hohlteil gebildete Aufweitelement kann erwärmtes Wasser gefüllt werden, welches aus den Durchbrüchen 24 in den gefrorenen Tierkörper austreten kann, um das Antauen zwecks erleichterter Herauslösung des Aufweitelementes zu beschleunigen.

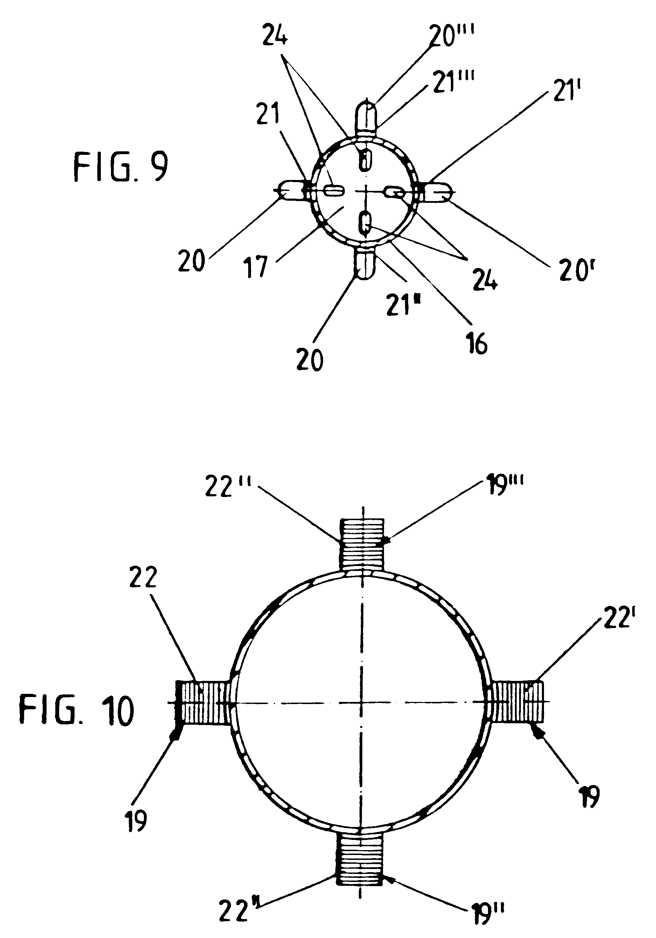

Fig. 9 zeigt eine Schnittansicht des dritten Abschnittes 16 entlang der Linie IX-IX in Fig. 6. Gleiche Bauteile sind mit gleichen Bezugszeichen bezeichnet. Fig. 9 läßt erkennen, daß vier erste Vorsprünge angeordnet sind, die jeweils als Laschen 20,20ʹ,20ʺ,20‴ ausgeformt und mittels entsprechender Filmscharniere 21,21ʹ.21ʺ.21‴ mit dem driten Abschnitt 16 gelenkig verbunden sind.

Fig. 10 zeigt eine Seitenansicht entlang der Linie X-X in Fig. 6 gesehen, wobei wiederum erkennbar ist, daß ebenfalls vier zweite Vorsprünge 19,19ʹ,19ʺ,19‴ angeordnet sind, die ebenfalls als Laschen 22,22ʹ.22ʺ.22‴ ausgebildet sind, welche an ihrer Oberfläche eine aufrauhende Profilierung aufweisen.

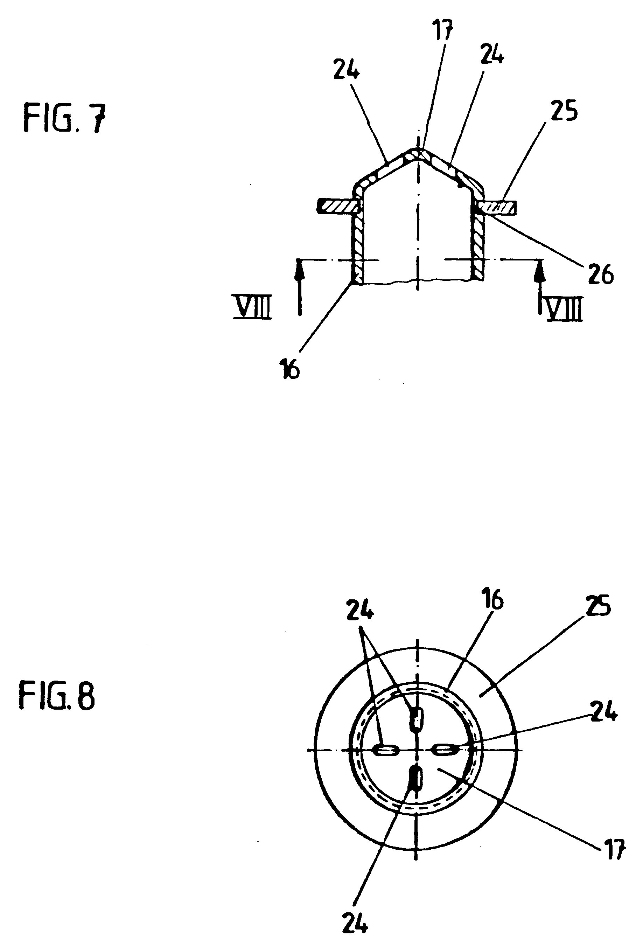

Fig. 7 zeigt das freie Ende des dritten Abschnittes 16 im Schnitt dargestellt, wobei eine zweite Ausführungsform der Vorsprünge vorgesehen ist. Bei diesem Ausführungsbeispiel ist als Vorsprung wenigstens eine, am dritten Abschnitt 16 flanschartig angeordnete Ringscheibe 25 vorgesehen, die aus flexiblem Werkstoff besteht. Zur Halterung der Ringscheibe am dritten Abschnitt 16 weist dieser wenigstens eine umlaufende Nut 26 zur Aufnahme je einer Ringscheibe 25 auf.

Fig. 8 zeigt eine Schnittansicht entlang der Linige VIII-VIII in Fig. 7 zur Verdeutlichung der Anordnung der Ringscheibe 25.

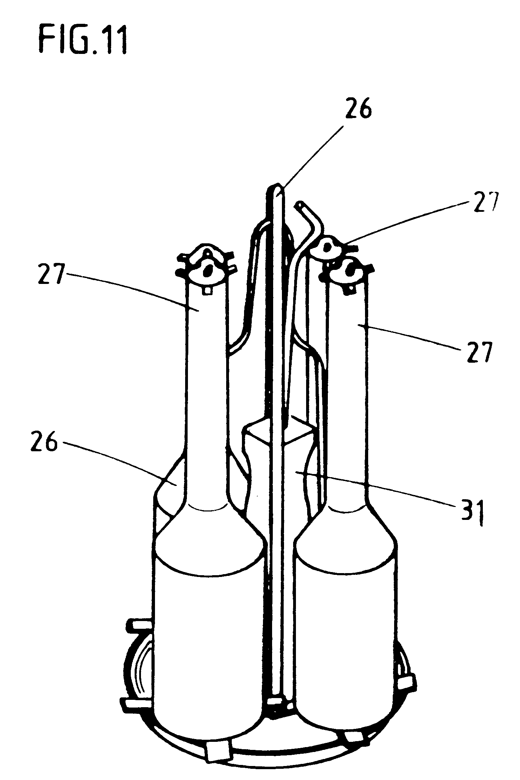

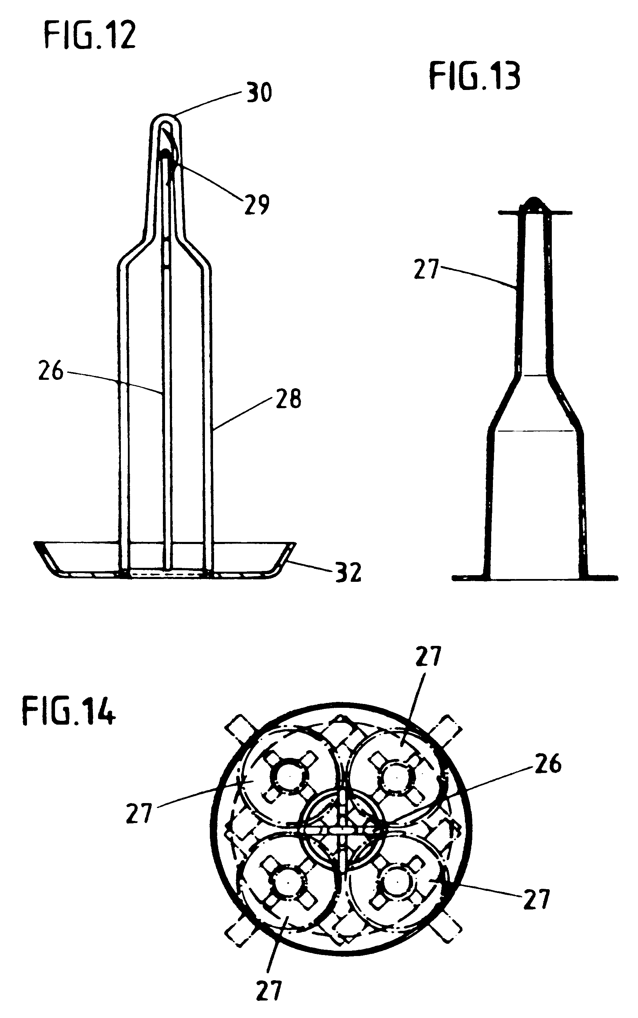

Fig. 11 zeigt ein Set von Stützelementen, wobei das Stützelement 26 als während des Garvorganges zu verwendendes Stützelement ausgebildet ist und die Stützelemente 27 als während einer Gefrierlagerung in einem Fleischstück verbleibende Stützelemente ausgebildet sind. Es ist zu erkennen, daß das Stützelement 26, wie sich auch aus Fig. 12 ergibt, aus zwei kreuzförmig zueinander angeordneten Drahtschlaufen 28 besteht, wobei eine Drahtschlaufe im Spitzen-Abschnitt die andere überragt, so daß sich einerseits ein vorteilhafter Luftdurchzugsweg entsprechend dem Pfeil 29 (Fig. 12) ergibt, andererseits an der Spitze 30 mittels eines Hakenelementes 31 (vgl. Fig. 11) das Stützelement mit darauf befindlichem Fleischstück, insbesondere Geflügel, in einen Grillherd eingesetzt werden kann und aus diesem herausgenommen werden kann.

Das Stützelement gemäß Fig. 12 besitzt eine untere, auch schon vorstehend beschriebene, Auffangwanne 32 für herunterlaufendes Fett und dergleichen.

Die in Fig. 13 dargestellte Schnittwiedergabe eines Stützelementes entspricht im wesentlichen der Darstellung gemäß Fig. 6, so daß hierauf Bezug genommen wird. In Fig. 13 ist jedoch besonders deutlich die durchgehende Konizität des Stützelementes zu erkennen.

Fig. 14 zeigt eine Draufsicht auf den Gegenstand gemäß Fig. 11. Es ist die vorteilhafte setartige Zuordbarkeit der Stützelemente 27 zu einem Stützelemen 26, etwa zur Ausbildung eines Verkaufssets zu erkennen.

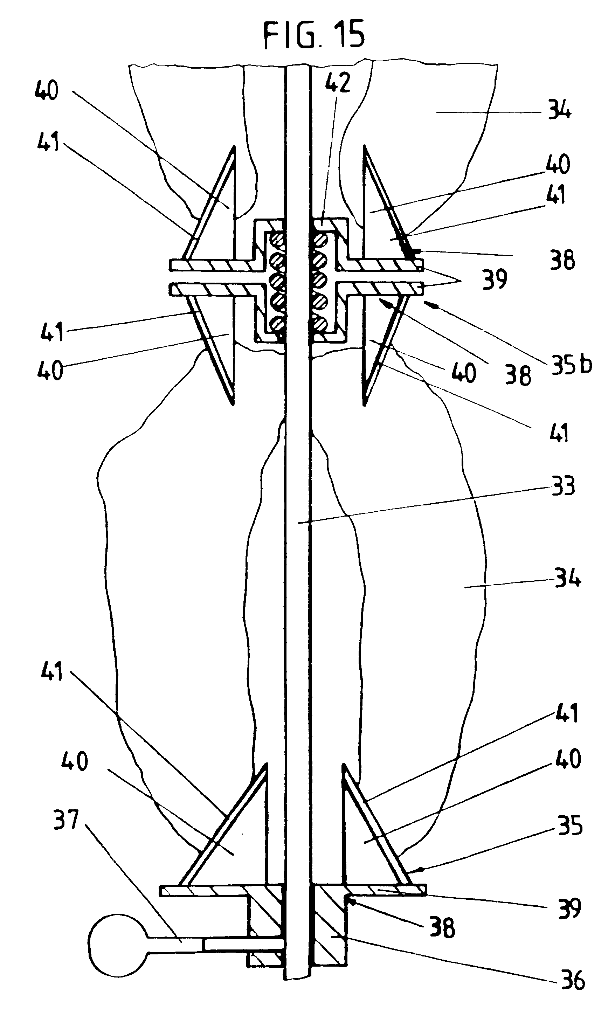

Fig. 15 zeigt einen Abschnitt eines Grillspießes 33, auf dem Stücke von Grillgut 34 aufgespießt sind. Jedes Stück Grillgut 34 ist auf dem Spieß zwischen zwei Klammerlementen 35a,b geklammert, die auf den Grillspieß 33 aufgeschoben sind. Das Klammerelement 35a weist ein Gleitstück 36 auf, das mit einer Schraube 37 auf den Grillspieß 33 festgesetzt ist. Dem Grillgut 34 zugewandt ist ein Greifelement 38 mit einem Teller 39 und vom Teller 39 vorragenden Zinken 40 am Gleitstück 36 angeordnet. Die Zinken 40 weisen angeschliffene Schneidflanken 41 auf, die in das Grillgut 34 einschneiden.

Das andere Klammerelement 35b weist zwei Greifelemente 38 mit Zinken 40 auf, wobei die Zinken 40 einander abgewandt sind und in unterschiedliches Grillgut 34 einstechen. Zwischen die Teller 39 der Greifelemente 38 des Klammerelmenttes 35b ist eine Schraubenfeder 42 gesetzt, die zusammengedrückt ist und dadurch mit ihrer Federkraft auf die Teller 39 der Greifelemente 38 in Längsrichtung des Grillspießes 33 einwirkt.

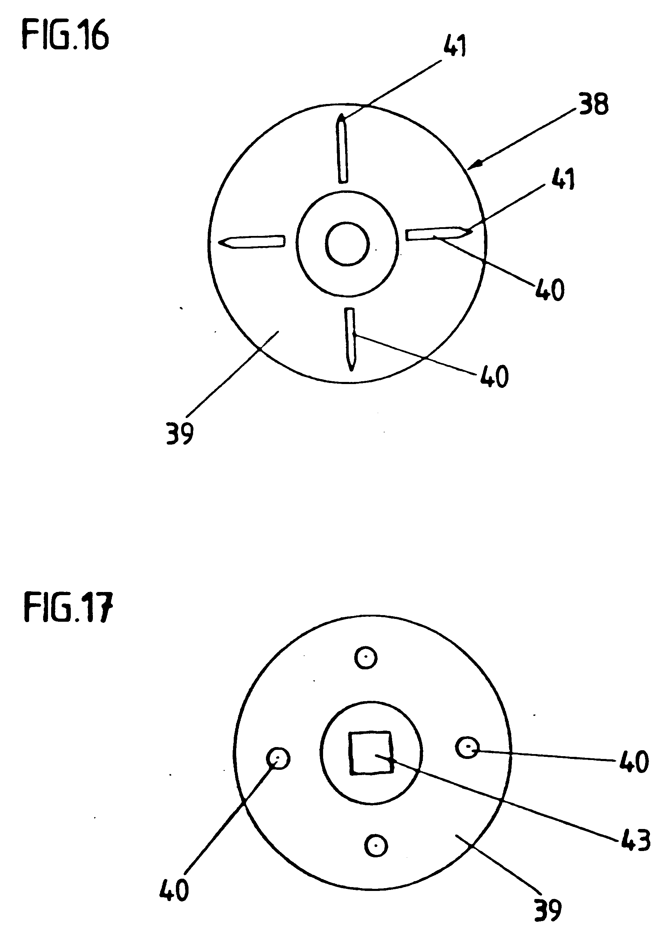

In Fig. 16 ist ein Teller 39 eines Greifelementes 38 zu erkennen, wobei die Zinken 40 im Schnitt dargestellt sind und das Profil der Schneidflanken 41 zu erkennen ist.

Fig. 17 zeigt einen Teller 39 mit dornartig ausgebildeten Zinken 40. Im Zentrum des Tellers 39 befindet sich eine quadratische Durchbrechung 43, durch die ein Grillspieß 33 mit quadratischem Querschnitt hindurchgesteckt werden kann, so daß der Teller 39 drehfest auf dem Grillspieß 33 angeordnet ist.

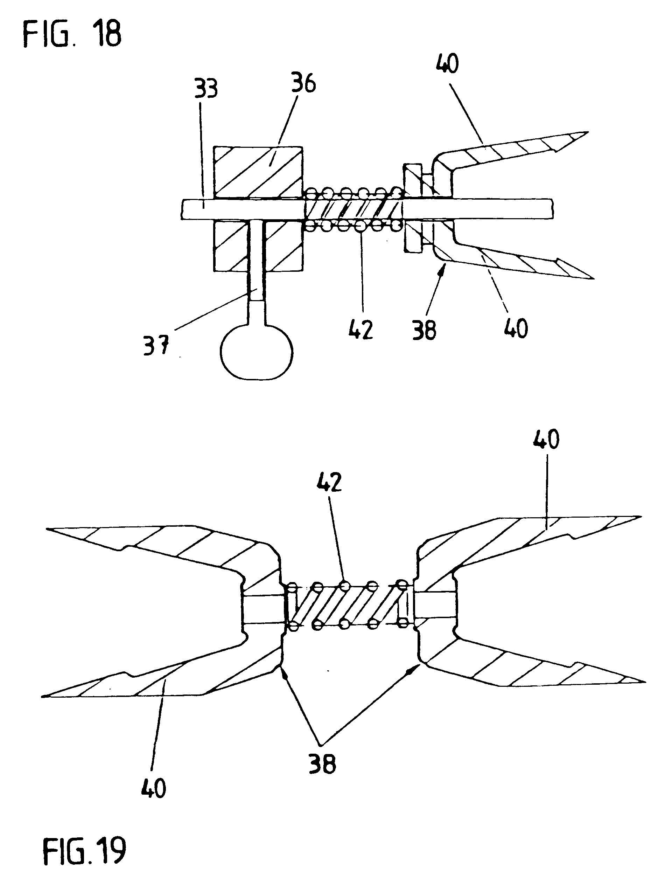

Fig. 18 zeigt ein weiteres Ausführungsbeispiel eines Klammerelementes mit einem Greifelement 38 mit Zinken 40, welches über eine Schraubenfeder 42 an einem mit einer Schraube 37 auf dem Grillspieß 33 festgesetzten Gleitstück 36 abgestützt ist.

Fig. 19 zeigt ein weiteres Ausführungsbeispiel eines Klammerelementes mit zwei Greifelementen 38 mit Zinken 40, die über eine Schraubenfeder 42 miteinander verbunden sind.

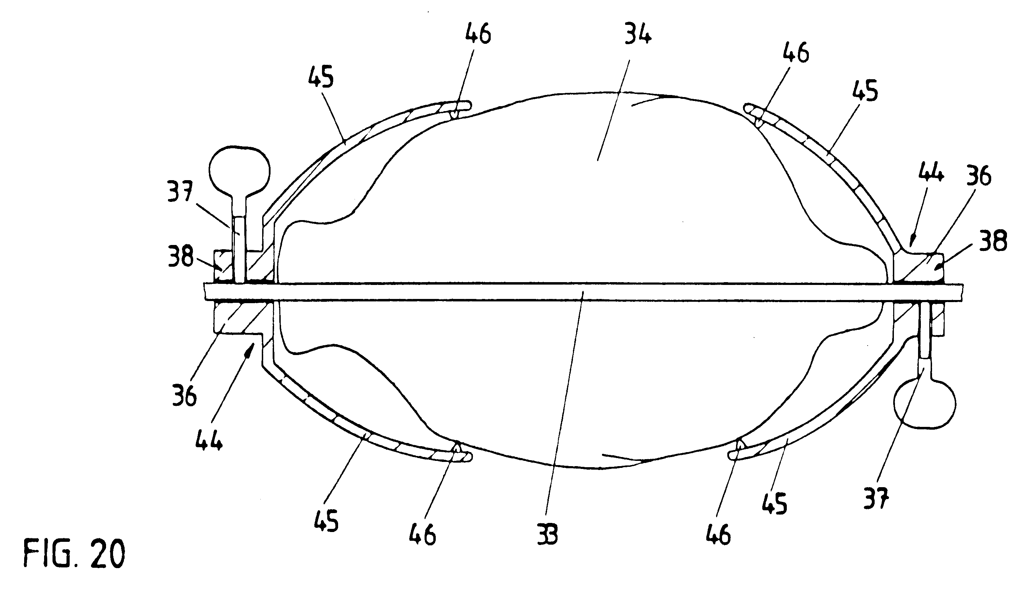

In Fig. 20 sind Klammerelemente 44 dargestellt, die an Gleitstücken 36 angeordnete Arme 45 aufweisen, die an der Außenseite des Grillgutes 34 anliegen. Die Arme 45 sind selbst federnd ausgebildet. Die Anlage der Arme 45 an dem Grillgut 34 ist durch Noppen 46 verbessert, die beispielsweise auch als in das Grillgut 34 eindringfähige Dornen ausgebildet sein können.

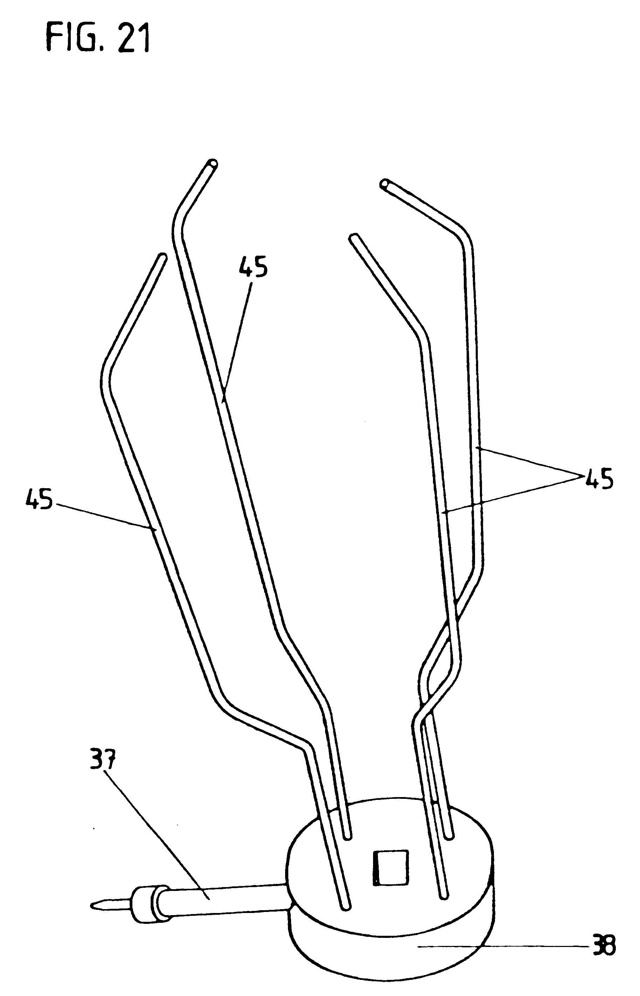

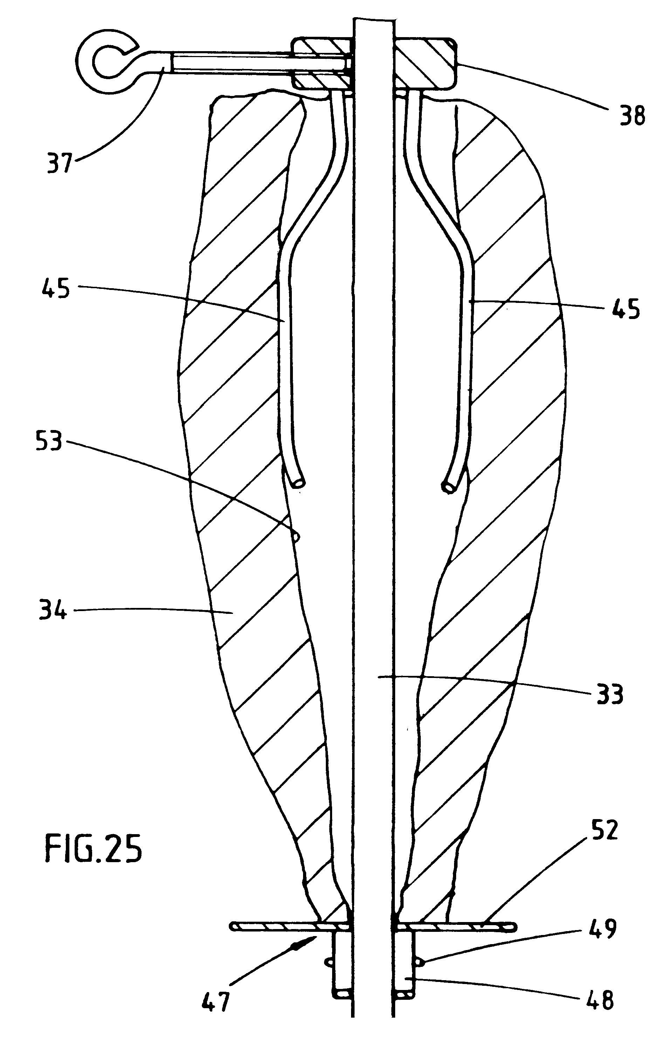

Fig. 21 zeigt eine Ansicht einer Ausführung des Klammerelementes bei der am Greifelement 38, das mit einer Schraube 37 auf einem Grillspieß festsetzbar ist, vier Arme 45 aus selbstfederndem Rundstahl angeordnet sind; die Arme 45 sind hier so ausgeformt, daß sie in einen Hohlraum im Grillgut eingreifen können (vgl. auch Fig. 25) und dabei dann als den Hohlraum von innen aufspreizende Aufspreizer wirken.

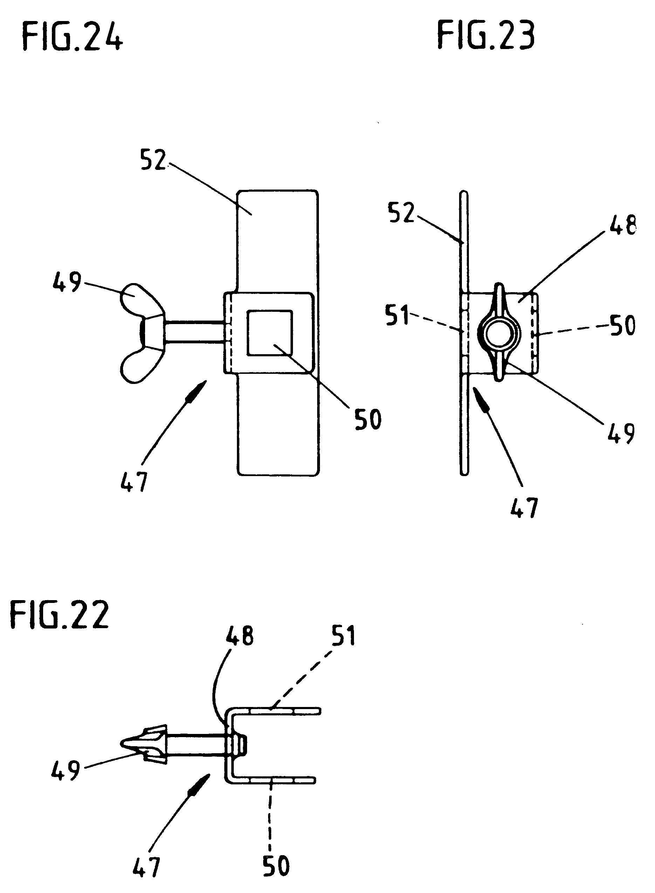

Fig. 22 zeigt eine Seitenansicht eines Anschlagelementes, das in Fig. 23 in der Draufsicht und in Fig. 24 in einer weiteren Seitenansicht dargestellt ist.

Das Anschlagelement 47 besitzt ein Festsetzungsteil 48 mit einer Festsetzungsschraube 49. Das Festsetzungsteil 48 weist eine Durchgangsbohrung 50 auf, durch welche ein Grillspieß hindurchsteckbar ist. Eine zugeordnete Durchgangsbohrung 51 ist in dem Anschlagteil 52 ausgebildet. Das Anschlagteil 52 weist eine Erstreckung auf, welche ein Mehrfaches, etwa das Fünf- bis Fünfzehnfache, des Durchmessers der Durchgangsbohrung 51 bezeigt.

Fig. 25 schließlich zeigt einen Grillspieß 33 mit aufgebrachtem Grillgut 34 und einem in das Grillgut 34 eingeführten Aufspreizelement gemäß Fig. 21. Die Arme 45 liegen in der inneren Höhlung 53, welche durch ein wie vorstehend beschriebenes Stützelement geschaffen ist, an. Während des Garvorganges und dem damit verbundenen Auftauen des Grillgutes 34 können die Arme 45 durch ein Aufspreizen die Halterung aufrechterhalten. Das Anschlagelement 47, welches bei dem Ausführungsbeispiel gemäß Fig. 25 verwendet ist, sorgt für eine sichere Anschlag-Halterung. Dieses Anschlagelement 47 ist jedoch insbesondere auch von Bedeutung im Zusammenhang mit der Verwendung von Klammerlementen - als Endstück - gemäß den Fig. 15 bis 19.

## Patentansprüche

1. Stützelement zum Einbringen in eine Durchgangshöhlung von Geflügel, mit mindestens einem oberen und einem unteren, unterschiedliche Durchmesser aufweisenden Abschnitt (2), bei insgesamt konischer Ausbildung, dadurch gekennzeichnet, daß beide Abschnitte (2) im wesentlichen zylindrisch ausgebildet sind und der durchmessergrößere Abschnitt (2) über eine stufenartige Verjüngung, die als Schulter für die Geflügelknochen dient, in den durchmesserkleineren Abschnitt übergeht (2).

2. Stützelement nach Anspruch 1, gekennzeichnet durch eine Öffnung am unteren Ende (9) und in Abständen zueinander angeordneten Stützen (1), welche in dem Spitzen-Abschnitt (2, 4) eine Luftdurchtrittsöffnung (Pfeil 29) ausbilden.

3. Stützelement nach einem oder mehreren der vorhergehenden Ansprüche, dadurch gekennzeichnet, daß die Stützen (1) aufspreizbar sind.

4. Stützelement nach einem oder mehreren der vorhergehenden Ansprüche, gekennzeichnet durch in vorbestimmten Bereichen etwa radial abstehende Vorsprünge (18, 18', 18'', 18''', 19, 19', 19'', 19''', 25).

5. Stützelement nach einem oder mehreren der vorhergehenden Ansprüche, dadurch gekennzeichnet, daß der Spitzen-Abschnitt (2, 4) eine geschlossene Spitze (10, 10a) aufweist.

6. System zum Gefrierlagern und zur Durchführung eines Garvorganges von eine Durchgangshöhlung aufweisendem Geflügel, mit einem zum Verbleib in dem Geflügel während einer Gefrierlagerung bestimmten ersten Element, gekennzeichnet durch ein zweites Stützelement zur Halterung des Geflügels in einer Garvorrichtung, wobei das zweite Stützelement im wesentlichen formgleich zu dem ersten Element ausgebildet ist, beide Elemente mindestens zwei, unterschiedlichen Durchmesser aufweisende Abschnitte besitzen und der durchmessergrößere Abschnitt über eine stufenartige Verjüngung, die als Schulter für die Geflügelknochen dient, in den durchmesserkleineren Abschnitt übergeht.

7. System zum Gefrierlagern nach Anspruch 6, mit einem Klammerelement zum Klammern des Geflügels, das auf einen Grillspieß aufschiebbar ist und in die Höhlung des Geflügels eindringfähige Klammerarme besitzt, dadurch gekennzeichnet, daß die federelastisch ausgebildeten Klammerarme (40, 45) parallel zum Grillspieß verlaufend ausgebildet sind, zur Anpassung an die Form der Höhlung.

8. System nach Anspruch 6, mit Klammerelementen zum Klammern von Geflügel, welche Klammerelemente auf einen Grillspieß aufschiebbar sind, mit gegen das Grillgut vorragenden, vorzugsweise in das Geflügel eindringfähigen Armen, dadurch gekennzeichnet, daß zwei Greifelemente (38) vorgesehen sind, deren Arme (40, 45) in einander entgegengesetzte Richtungen weisen und daß zwischen den Greifelementen (38) eine Druckfeder (42 angeordnet ist.

9. System nach Anspruch 8, dadurch gekennzeichnet, daß die Klammerarme (40, 45) als federnde Elemente ausgebildet sind.

10. System nach einem der Ansprüche 7 bis 9, dadurch gekennzeichnet, daß ein Klammerarm (40, 45) eine Schneidflanke (41) aufweist.

11. System nach einem der Ansprüche 6 bis 10 mit einem in Form eines Anschlagteiles gebildeten Festsetzungsteils mit einer Durchgangsbohrung für eine Grillstange, dadurch gekennzeichnet, daß das Anschlagteil (52) eine Erstreckung aufweist, welche ein Mehrfaches, etwa das fünf- bis fünfzehnfache, des Durchmessers der Durchgangsbohrung (51 bzw. 50) beträgt.

## Claims

1. Support element for introducing into a through cavity of poultry, with at least one top and one bottom section (2) having different diameters, of altogether conical construction, **characterised** in that both sections (2) are essentially cylindrical in shape and the section (2) with the larger diameter changes into the section (2) with the smaller diameter via a step-like taper which serves as the shoulder for the poultry bones.

2. Support element according to claim 1, **characterised** by an opening at the bottom end (9) and supports (1), arranged at intervals to each other, which in the pointed section (2, 4) form an air escape opening (arrow 29).

3. Support element according to one or more of the preceding claims, **characterised** in that the supports (1) can be expanded.

4. Support element according to one or more of the preceding claims, **characterised** by projections (18, 18', 18'', 18''', 19, 19', 19'', 19''', 25) which in predetermined areas are spaced approximately radially.

5. Support element according to one or more of the preceding claims, **characterised** in that the pointed section (2, 4) has a closed point (10, 10a).

6. System for freeze storing and for carrying out a cooking process of poultry having a through cavity, with a first element designed to remain in the body of the poultry during freeze storing, **characterised** in that a second support element for holding the poultry in a cooking device, in which the second support element is constructed essentially of the same shape as the first element, both elements having two sections each having different diameters and the section having the larger diameter changes into the section with the smaller diameter via a step-like taper which serves as the shoulder for the poultry.

7. System for freeze storing according to claim 6, with a clamp element for clamping the poultry, which can be placed on a spit, and has clamp arms which can enter the cavity of the poultry, **characterised** in that the spring-elastically constructed clamp arms (40, 45) are constructed to run parallel to the spit for adapting to the shape of the cavity.

8. System according to claim 6 with clamp elements for clamping poultry, which clamp elements can be slid onto a spit, with arms which can project towards the grilled object, preferably penetrating the poultry, **characterised** in that two gripper elements (38) are provided whose arms (40, 45) point in opposite directions to each other and that between the gripper elements (38) is arranged a compression spring (42).

9. System according to claim 8, **characterised** in that the clamp arms (40, 45) are constructed as resilient elements.

10. System according to one of the claims 7 to 9, **characterised** in that one clamping arm (40, 45) has a cutting edge (41).

11. System according to one of the claims 6 to 10, with a projecting part in the form of a stop part having a through bore for a roasting spit, **characterised** in that the stop part (52) has an extension which amounts to a multiple of the diameter of the through bore (51 or 50), approximately five to fifteen times the diameter of the through bore.

## Revendications

1. Elément de support destiné à être introduit dans une cavité traversante d'une pièce de volaille, muni d'au moins un tronçon supérieur (2) et un tronçon inférieur (2) de diamètres différents et présentant ensemble une forme conique, caractérisé en ce que les deux tronçons (2) sont réalisés sensiblement cylindriques et en ce que le tronçon (2) présentant le plus grand diamètre réalise la transition avec le tronçon (2) de plus petit diamètre par une forme conique en gradins qui sert d'épaulement pour les os de la pièce de volaille.

2. Elément de support selon la revendication 1, caractérisé par une ouverture à l'extrémité inférieure (9), ainsi que par des appuis disposés à distance l'un de l'autre et qui forment une ouverture de passage de l'air (flèche 29) dans le tronçon de pointe (2, 4).

3. Elément de support selon une ou plusieurs des revendications précédentes, caractérisé en ce que les appuis sont susceptibles de s'écarter.

4. Elément de support selon une ou plusieurs des revendications précédentes, caractérisé par des parties en saillie (18, 18', 18'', 18''', 19, 19', 19'', 19''', 25) s'étendant de façon sensiblement radiale dans des zones prédéterminées.

5. Elément de support selon une ou plusieurs des revendications précédentes, caractérisé en ce que le tronçon de pointe (2, 4) comporte une pointe fermée (10, 10a).

6. Système de stockage frigorifique et de mise en oeuvre d'un processus de cuisson au gril d'une pièce de volaille présentant une cavité traversante, muni d'un premier élément destiné à rester dans la pièce de volaille pendant son stockage frigorifique, caractérisé par un deuxième élément d'appui pour maintenir la pièce de volaille dans un dispositif de cuisson au gril, le deuxième élément de support présentant sensiblement la même forme que le premier élément, en ce que les deux éléments présentent au moins deux tronçons de diamètres différents et en ce que le tronçon de plus grand diamètre se prolonge dans le tronçon de plus petit diamètre par une forme conique en gradins qui sert d'épaulement pour les os de la pièce de volaille.

7. Système de stockage frigorifique selon la revendication 6, muni d'un élément d'agrafage pour agrafer la pièce de volaille et qui est susceptible de coulisser sur une broche de gril et qui comporte des bras d'agrafage aptes à pénétrer dans la cavité de la pièce de volaille, caractérisé en ce que les bras d'agrafage élastiques (40, 45) sont réalisés courants parallèlement à la broche de gril pour s'adapter à la forme de la cavité.

8. Système selon la revendication 6, avec des éléments d'agrafage pour l'agrafage de la pièce de volaille, ces éléments d'agrafage étant susceptibles de coulisser sur une broche de gril et étant munis de bras faisant saillie vers l'objet à passer au gril et qui sont de préférence susceptibles de pénétrer dans la pièce de volaille, caractérisé en ce qu'il comporte deux éléments de saisie (38) dont des bras (40, 45) sont orientés selon des directions opposées et en ce qu'entre les éléments de saisie (38), est disposé un ressort de compression (42).

9. Système selon la revendication 8, caractérisé en ce que les bras d'agrafage (40, 45) sont réalisés sous la forme d'éléments élastiques.

10. Système selon l'une des revendications 7 à 9, caractérisé en ce qu'un bras d'agrafage (40, 45) comporte une arête de coupe (41).

11. Système selon l'une des revendications 6 à 10 muni d'une partie de fixation réalisée sous la forme d'une partie de butée présentant un passage traversant pour une broche de gril, caractérisé en ce que la partie de butée (52) présente une extension qui est un multiple, environ de cinq à quinze fois, du diamètre du passage traversant (51 ou 50).
